# FASCICULE DE BREVET EUROPEEN

(11) **EP 4 060 329 B1**
(45) Date de publication et mention de la délivrance du brevet: **12.06.2024**
(21) Numéro de dépôt: 22160256.8
(22) Date de dépôt: 04.03.2022
(51) Int. Cl.: G01N 21/77

(54) **CAPTEUR OPTOMECANIQUE DE CONCENTRATION D'ESPECES EN MILIEU LIQUIDE**
OPTOMECHANISCHER SENSOR FÜR DIE KONZENTRATION VON ARTEN IN EINEM FLÜSSIGEN MEDIUM
OPTOMECHANICAL SENSOR FOR CONCENTRATION OF SPECIES IN A LIQUID MEDIUM

(30) Priorité: 18.03.2021 FR 2102697
(43) Date de publication de la demande: 21.09.2022
(73) Titulaire: Commissariat à l'énergie atomique et aux énergies alternatives, 75015 Paris (FR)
(72) Inventeur: SANSA PERNA, Marc, 38054 GRENOBLE CEDEX 09 (FR); ALAVA, Thomas, 38054 GRENOBLE CEDEX 09 (FR); HENTZ, Sébastien, 38054 GRENOBLE CEDEX 09 (FR)
(74) Mandataire: Brevalex

(56) Documents cités:
- EP-A1- 3 462 145
- KING YAN FONG ET AL: "Nano-optomechanical resonators in microfluidics", ARXIV.ORG, CORNELL UNIVERSITY LIBRARY, 201 OLIN LIBRARY CORNELL UNIVERSITY ITHACA, NY 14853, 25 mars 2015 (2015-03-25), XP081333099, DOI: 10.1021/ACS.NANOLETT.5B02388 & Fong King Yan ET AL: "Supporting Information: Nano-optomechanical resonators in microfluidics", Physics Optics, 25 mars 2015 (2015-03-25), XP055947070, Extrait de l'Internet: URL:https://pubs.acs.org/doi/10.1021/acs.n anolett.5b02388 [extrait le 2022-07-28]
- HERMOUET M ET AL: "1 million-Q optomechanical microdisk resonators for sensing with very large scale integration", PROGRESS IN BIOMEDICAL OPTICS AND IMAGING, SPIE - INTERNATIONAL SOCIETY FOR OPTICAL ENGINEERING, BELLINGHAM, WA, US, vol. 10491, 19 février 2018 (2018-02-19), pages 104910C-104910C, XP060102037, ISSN: 1605-7422, DOI: 10.1117/12.2290322 ISBN: 978-1-5106-0027-0
- HE YONG: "Sensitivity of optical mass sensor enhanced by optomechanical coupling", APPLIED PHYSICS LETTERS, A I P PUBLISHING LLC, US, vol. 106, no. 12, 23 mars 2015 (2015-03-23), XP012195656, ISSN: 0003-6951, DOI: 10.1063/1.4916553 [extrait le 1901-01-01]
- TAEJOON KOUH ET AL: "Nanomechanical Motion Transducers for Miniaturized Mechanical Systems", MICROMACHINES, vol. 8, no. 4, avril 2017 (2017-04), page 108, XP055490696, DOI: 10.3390/mi8040108

## Description

### DOMAINE TECHNIQUE ET ÉTAT DE LA TECHNIQUE ANTÉRIEURE

La présente invention se rapporte à un capteur optomécanique de concentration d'espèces en milieu liquide, en particulier d'espèces biologiques.

Il existe différentes techniques pour détecter et quantifier des espèces biologiques dans un liquide. Par exemple, la méthode immuno-enzymatique ELISA (« Enzyme-linked immunosorbent assay » en terminologie anglo-saxonne) pour « dosage d'immuno-absorption par enzyme liée », c'est-à-dire dosage immuno-enzymatique sur support solide, est un examen de laboratoire, qui permet de détecter la présence d'un anticorps ou d'un antigène dans un échantillon.

Cette méthode met en oeuvre un test immunologique, dans lequel le dosage est couplé à une réaction catalysée par une enzyme qui libère un composant coloré suivi par une spectroscopie. Cette méthode est longue et d'usage unique.

Il existe également une méthode basée sur des résonateurs à plasmon de surface. La fixation d'une molécule sur la surface est suivie par résonance plasmonique de surface, qui détecte les changements d'indice optique au niveau de la surface, et permet d'en déduire la concentration en molécules. Cette méthode est facile d'utilisation et rapide, mais elle est peu sensible.

Il existe également des dispositifs mettant en oeuvre un résonateur optomécanique, tel que décrit dans le document [1] comportant un disque optomécanique sur lequel on dépose une bactérie. La bactérie a pour effet de modifier la fréquence de résonance mécanique du disque, ce qui modifie le trajet optique dans le disque, modifiant l'intensité de lumière. A partir de cette variation d'intensité, il est possible de déterminer la masse déposée sur le disque.

Le mode optique est généralement localisé sur une partie du disque, que l'on peut définir comme zone active optique. Cette zone est généralement localisée sur la périphérie du disque.

Or le mode optique n'est pas complètement confiné dans le disque. Il en résulte que, lorsqu'une masse à détecter se dépose sur la zone active optique, elle induit une réponse mécanique mais elle perturbe également le mode optique, produisant un décalage en longueur d'onde du mode et des pertes qui en dégradent sa qualité. Il est alors nécessaire de mettre en oeuvre une boucle fermée pour suivre la longueur d'onde du mode optique, qui est modifiée au fur et à mesure que de la masse se dépose sur le disque afin de tenir compte de cette variation dans la détermination de la masse déposée. En outre, la qualité du mode optique se dégrade avec la masse rajoutée, limitant la durée de vie du capteur.

Ces inconvénients sont d'autant plus gênants que la zone sensible sur laquelle la masse à détecter se dépose et la zone active optique correspondent au moins en partie à la même zone de la surface du capteur.

D'autres documents divulguent également des résonateurs opto-mécaniques pour faire de la spectrométrie de masse [1bis] ou des résonateurs électromécaniques intégrant à la fois un guide optique et un canal fluidique [1ter].

### EXPOSÉ DE L'INVENTION

C'est par conséquent un but de la présente invention d'offrir un capteur de concentration d'espèces en milieu liquide ne présentant pas les inconvénients de l'état de la technique énoncés ci-dessus.

Le but énoncé ci-dessus est atteint par un capteur de concentration d'au moins une espèce contenue dans un liquide comme défini dans la revendication 1 et comportant au moins un résonateur optique et au moins un résonateur mécanique couplés l'un à l'autre, au moins un guide d'onde couplé optiquement avec le résonateur optique. Le capteur comporte une couche d'isolation optique formée sur la surface du résonateur optique de sorte à au moins recouvrir le mode optique et à isoler le mode optique de la surface du résonateur optique et ainsi rendre le mode optique peu sensible, voire insensible à l'état de surface du résonateur optique. Le mode optique est alors sensible uniquement ou presque uniquement au mouvement du résonateur.

Ainsi lorsqu'une masse se dépose sur le résonateur optique, celle-ci ne perturbe pas le mode optique. Ou lorsque les propriétés optiques de la surface du résonateur sont modifiées du fait d'un traitement, par exemple le dépôt d'une couche d'accroche, le mode optique est peu ou pas perturbé.

De préférence, le matériau de la couche d'isolation optique est choisi de sorte à présenter un indice optique par rapport à celui du matériau du résonateur optique tel que le mode optique reste confiné dans le résonateur.

De préférence, le matériau de la couche d'isolation optique présente des propriétés mécaniques telles que la fonction du capteur n'est pas ou peu dégradée.

Dans le cas d'un résonateur optique en forme de disque, le mode optique est généralement localisé en périphérie du disque, la couche d'isolation optique peut être de forme annulaire recouvrant la périphérie du disque.

En d'autres termes, on isole le mode optique de sorte à le rendre insensible ou très peu sensible aux effets sur le surface du capteur.

De préférence, le résonateur mécanique vibre en mode de volume dans le plan du capteur et à fréquence élevée.

Le résonateur optique et le résonateur mécanique sont formés par le même objet, formant un résonateur optomécanique. Le résonateur optomécanique est au moins en partie fonctionnalisé de sorte à être sélectif par rapport à ladite au moins une espèce.

L'objet de la présente demande est alors une structure de capteur de concentration d'au moins une espèce donnée en milieu liquide comportant un support, au moins un guide d'onde, au moins un résonateur optique suspendu au support, ledit résonateur optique étant couplé optiquement au guide d'onde, de sorte que le guide d'onde injecte dans le résonateur optique une onde électromagnétique et collecte ladite onde électromagnétique sortant du guide d'onde, ledit résonateur optique comprenant une zone active optique de circulation de l'onde électromagnétique, au moins un résonateur mécanique suspendu au support, ledit résonateur mécanique et ledit résonateur optique étant couplés, ledit résonateur mécanique étant configuré pour vibrer en mode de volume et comportant au moins une face s'étendant dans le plan du capteur et configurée pour recevoir des molécules de ladite espèce donnée. Le résonateur optique comporte un corps comprenant la zone active optique, ledit corps comprenant une première face et une deuxième face, la deuxième face étant en regard du support et la première face étant orientée à l'opposé du support, ledit résonateur optique comportant également une couche d'isolation optique déposée au moins sur la première face au moins à l'aplomb de la zone active optique de sorte à confiner au moins en partie l'onde électromagnétique dans le corps.

La couche d'isolation optique est avantageusement également déposée sur le guide d'onde.

De préférence, le rapport entre l'indice de réfraction optique d'un matériau de la couche d'isolation optique et l'indice de réfraction optique d'un matériau du corps est inférieur ou égal à 0,75.

De préférence également, le rapport entre le module d'Young d'un matériau de la couche d'isolation optique et du module d'Young d'un matériau du corps est inférieur ou égale à 10.

La couche d'isolation optique présente avantageusement une épaisseur inférieure ou égale à la distance entre la première face du corps et la deuxième face du corps.

Selon une caractéristique additionnelle, la couche d'isolation optique comporte plusieurs matériaux présentant des indices optiques différents.

Par exemple, le résonateur optique a la forme d'un disque, d'un anneau ou d'un hippodrome et la zone active optique est située dans la partie périphérique extérieure du corps et la couche d'isolation optique a la forme d'un anneau.

Le résonateur mécanique comporte une couche de fonctionnalisation spécifique à ladite espèce donnée. De préférence, la couche de fonctionnalisation est présente uniquement sur la couche d'isolation optique.

Le résonateur optique et le résonateur mécanique sont un même élément suspendu au support, la première face formant la face configurée pour recevoir des molécules, ledit élément étant un résonateur optomécanique.

Par exemple, le corps est en silicium et la couche d'isolation optique est choisie parmi le SiO₂, l'AIN ou le Al₂O₃.

De préférence, la dimension du résonateur mécanique et du résonateur optique dans la direction normale au plan du capteur est au moins 10 fois inférieure aux dimensions du résonateur mécanique et du résonateur optique dans le plan du capteur.

La couche de fonctionnalisation est avantageusement homogène et/ou a une épaisseur inférieure ou égale à 20 nm.

Selon une caractéristique additionnelle, le résonateur mécanique est configuré pour vibrer dans un mode radial.

Dans un exemple de réalisation, le résonateur mécanique et le résonateur optique sont suspendus par un pied reliant une face du ou des résonateurs en regard du support et le support.

La Structure de capteur de concentration peut comporter des moyens d'excitation du résonateur mécanique de sorte à le mettre en vibration, de préférence à sa fréquence de résonance.

Selon une caractéristique additionnelle, la structure de capteur de concentration comporte plusieurs ensembles de résonateurs optiques et mécaniques couplés ou plusieurs résonateurs optomécaniques, couplés à un unique guide d'onde.

Un autre objet de la présente demande est un capteur de concentration d'au moins une espèce donnée en milieu liquide comportant au moins une structure de capteur selon l'invention, une source lumineuse connectée à une extrémité du guide d'onde, et des moyens de traitement de l'onde lumineuse connectés à l'autre extrémité du guide d'onde.

Un autre objet de la présente demande est un système microfluidique comportant au moins un canal de circulation du liquide dont la concentration d'au moins une espèce est à mesurer et au moins un capteur de concentration selon l'invention, le résonateur optique et le résonateur mécanique étant disposés dans le canal.

### BRÈVE DESCRIPTION DES DESSINS

La présente invention sera mieux comprise sur la base de la description qui va suivre et des dessins en annexe sur lesquels:
La figure 1A est une vue en perspective d'un exemple de capteur de concentration optomécanique.
La figure 1B est une vue agrandie du résonateur optomécanique de la figure 1A.
La figure 2 est une vue de côté d'un autre exemple de résonateur optomécanique.
La figure 3A est une vue de côté d'un autre exemple de résonateur optomécanique.
La figure 3B est une vue de dessus du résonateur de la figure 3A.
La figure 4 est une vue de côté d'une variante du de résonateur optomécanique de la figure 3A.
La figure 5 est une vue de côté d'un exemple de résonateur optomécanique comportant une couche de fonctionnalisation.
La figure 6 est une vue de côté d'un exemple de résonateur optomécanique comportant une couche d'accroche et une couche de fonctionnalisation.
La figure 7 est une vue de dessus représentée schématiquement d'un exemple de capteur de concentration comportant des moyens d'excitation.
La figure 8 est une vue de dessus représentée schématiquement d'un capteur de concentration dont le résonateur comportant des trous permettant d'augmenter sa précision.
La figure 9 est une vue en perspective d'un autre exemple de capteur de concentration présentant une structure particulière de guide d'onde.
La figure 10 est une vue de côté d'un exemple de réalisation d'un résonateur pouvant être mis en oeuvre dans le capteur de concentration selon l'invention.
La figure 11 est une vue de dessus d'un exemple de capteur mettant en oeuvre le résonateur de la figure 10.
La figure 12 est une représentation schématique d'un exemple d'un système microfluidique mettant en oeuvre au moins un capteur de concentration selon l'invention.
La figure 13 est une représentation schématique d'un autre exemple d'un système microfluidique mettant en oeuvre au moins un capteur de concentration selon l'invention.
La figure 14 est une représentation schématique d'un autre exemple d'un système microfluidique mettant en oeuvre au moins un capteur de concentration selon l'invention.
La figure 15 est une représentation schématique d'un exemple de capteur comportant un résonateur optique et un résonateur optique distincts et couplés l'un à l'autre.
Les figures 16A à 16F sont des représentations schématiques d'éléments obtenus au cours d'étapes d'un exemple de procédé de fabrication d'un capteur selon l'invention.

### EXPOSÉ DÉTAILLÉ DE MODES DE RÉALISATION PARTICULIERS

Un mode optique est défini généralement comme une solution particulière de propagation d'une onde électromagnétique dans une cavité définie dans, par exemple, un résonateur optique. Dans la présente demande, le terme « mode optique » désigne la zone du résonateur dans laquelle se situe le trajet de propagation de cette onde.

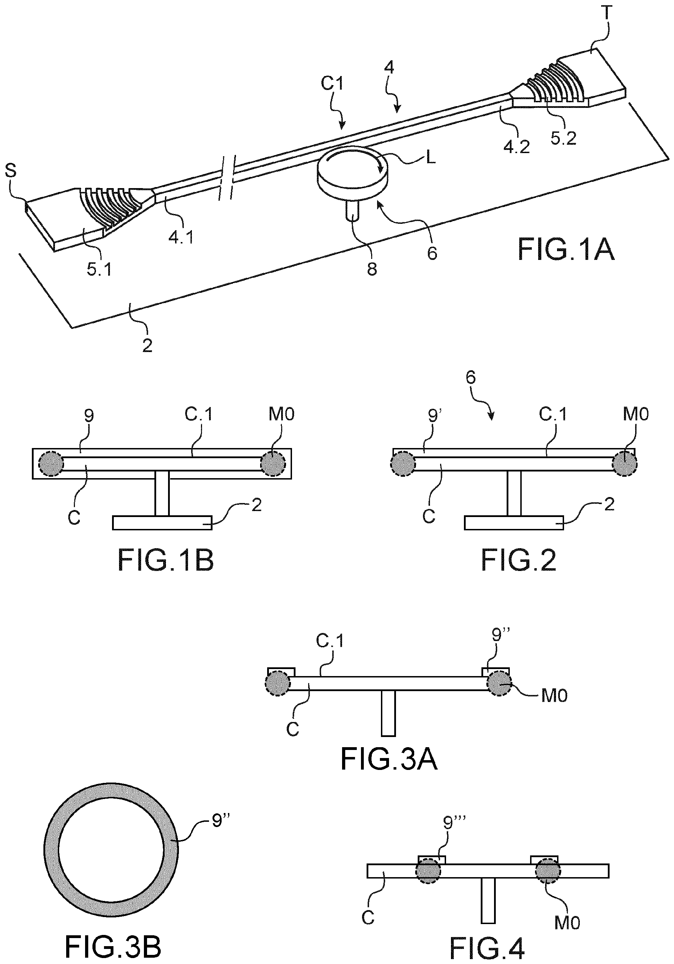

Sur la figure 1A, on peut voir un exemple de capteur C1 de concentration d'espèces en milieu liquide utilisé dans l'invention.

Dans la présente demande, on entend par « espèces », des espèces biologiques, tels que des bactéries ou des virus, des molécules chimiques, des atomes et/ou des nanoparticules.

Les espèces à détecter ont des dimensions comprises entre quelques dizaines de nm à quelques µm. Les espèces ont des dimensions maximales inférieures ou égales aux dimensions du résonateur dans le plan, qui sera décrit ci-dessous.

Le liquide peut être le sang, le plasma, les humeurs, et plus généralement tout liquide corporel, l'eau des cours d'eau, tels que les rivières, les fleuves, l'eau des océans, l'eau des réseaux d'alimentation en eau des villes... et tout autre liquide que l'on souhaite analyser.

Le capteur C1 comporte un support ou substrat 2, au moins un guide d'onde 4 supporté par le substrat et un résonateur optomécanique 6 suspendu au substrat 2, une source lumineuse S et des moyens de traitement T de l'onde lumineuse sortant du guide d'onde. Le support 2, le guide d'onde 4, le résonateur optomécanique 6 forme une structure de capteur. L'onde lumineuse est désignée L.

Le guide d'onde 4 comporte une extrémité d'entrée 4.1 d'une onde lumineuse connectée à une source lumineuse par l'intermédiaire d'un réseau de couplage 5.1, et une extrémité de sortie 4.2 connectée à des moyens de traitement de l'onde lumineuse sortant du guide d'onde par l'intermédiaire d'un réseau de couplage 5.2.

Le résonateur 6 est disposé à proximité d'un flanc du guide d'onde 4 de sorte à être coupler optiquement à celui-ci. Le guide d'onde est dans le champ évanescent du résonateur, de sorte que l'onde lumineuse provenant de la source soit injectée dans le résonateur optique et que l'onde lumineuse ayant circulé dans le résonateur soit collectée par le guide d'onde.

La largeur de l'espace entre le flanc du guide d'onde et le bord latéral du résonateur est par exemple comprise entre 10 nm et 200 nm.

Dans l'exemple représenté le résonateur optomécanique 6 a la forme d'un disque suspendu à un pied 8 fixé à une face du disque en regard du substrat. Le disque s'étend dans un plan du capteur. Le résonateur comporte deux faces d'extrémité sensiblement parallèles au plan du capteur et une face latérale (figure 1B).

Dans la présente demande, on entend par « plan du capteur » un plan parallèle au substrat.

De préférence le pied présente un diamètre faible par rapport aux dimensions du disque dans le plan du capteur, plus particulièrement un diamètre faible par rapport au diamètre du disque, de préférence le pied présente un diamètre 10 fois plus petit que le diamètre du disque.

Plus généralement, le diamètre du pied est dix fois plus petit que la plus petite dimension du résonateur dans le plan du capteur, ainsi le pied gêne peu ou pas la vibration radiale du résonateur.

En variante, le résonateur est suspendu par des ressorts dans le plan ou par des poutres de taille nanométriques s'étendant radialement et comprimées et tendues par la vibration du disque. Les ressorts ou les poutres sont alors dimensionnés pour présenter une raideur axiale plus faible que celle du résonateur.

Toute autre forme de résonateur peut convenir, par exemple vue de dessus le résonateur peut avoir une forme d'anneau, d'ellipse ou hippodrome (« racetrack » en terminologie anglo-saxonne). En variante, le résonateur est un cristal photonique.

Comme cela est représenté sur la figure 1B, le résonateur comporte un corps C, comprenant un mode optique MO et une couche d'isolation optique 9 recouvrant le corps. Le mode optique MO est schématisé par des traits en pointillés. Dans cet exemple, le mode optique MO est situé dans la périphérie extérieure du corps C.

La couche d'isolation optique 9 est telle qu'elle assure une isolation du mode optique vis-à-vis de l'extérieur afin de limiter les perturbations du mode optique par les effets sur la surface extérieure du résonateur.

Le matériau de la couche d'isolation optique est choisi tel qu'il offre un bon contraste d'indice de réfraction optique avec le matériau du corps C, afin que le mode optique reste confiné dans le corps.

On entend par « bon contraste d'indice de réfraction optique » une différence entre l'indice de réfraction optique du corps C et celui de la couche d'isolation optique 9, telle qu'une réflexion totale de l'onde électromagnétique vers le corps est obtenue. La différence d'indices optiques dépend du mode optique d'intérêt, mais l'indice optique de la couche 9 est de préférence inférieur à 0,75 fois celui du corps C. La réflexion totale désigne une réflexion de 100% de l'onde qui est réfléchi ?

Par exemple, le corps C est en silicium d'indice optique 3,4 et la couche d'isolation optique 9 est en SiO2 d'indice de réfraction optique égal à 2,3 pour une longueur d'onde de 1,55 µm.

En variante la couche d'isolation optique 9 est en AIN d'indice de réfraction de 2 ou en Al₂O₃, d'indice de réfraction de 1,7 pour une longueur d'onde de 1,55 µm.

En variante le corps C est en GaAs d'indice de réfraction de 3,4 ou en Ge d'indice de réfraction 4,25 pour une longueur d'onde de 1,55 µm.

Le corps C combiné avec la couche d'isolation optique 9 forme un guide d'onde pour l'onde électromagnétique.

Dans un exemple particulièrement avantageux, la couche d'isolation optique 9 est également déposée sur tout ou partie du guide d'onde, ce qui permet de réduire la dégradation de la performance du guide d'onde résultant d'un dépôt de particules sur celui-ci.

De préférence, le matériau de la couche d'isolation optique 9 présente des propriétés mécaniques proches ou égales à celle du matériau du corps afin de ne pas dégrader la réponse mécanique du résonateur. De préférence, le matériau de la couche d'isolation optique a un module d'Young du même ordre de grandeur que celui du matériau du corps ; le rapport entre le module d'Young de la couche d'isolation 9 et le module d'Young du matériau du corps est inférieur ou égal à 10.

En effet le résonateur vibre dans le plan de préférence dans un mode radial, il est donc préférable que la couche d'isolation optique 9 ne modifie pas ou peu le mode de résonance mécanique du résonateur.

Par exemple, le corps C est en Si avec un module d'Young de 160 GPa et la couche d'isolation en SiO₂, AIN ou Al₂O₃ avec des modules d'Young de 65 Gpa, 277 GPa et 350 GPa respectivement.

Dans le cas où le résonateur optique et le résonateur mécanique sont distincts comme cela sera décrit ci-dessous, les propriétés mécaniques du matériau de la couche d'isolation optique n'ont pas d'influence sur la détection.

L'épaisseur de la couche d'isolation optique 9 dépend de celle de du corps. De préférence, la couche d'isolation optique 9 a une épaisseur inférieure ou égale à celle du corps C, et de préférence égale à l'épaisseur du corps assurant une isolation du mode optique. Une épaisseur proche ou égale de celle du corps permet d'assurer un bon confinement de mode optique tout en limitant l'effet mécanique de la couche d'isolation sur le résonateur

A titre d'exemple le corps C a un diamètre compris entre 200 nm et 200 µm, une épaisseur comprise entre 1/100 et 1/10 de son diamètre et la couche d'isolation optique a une épaisseur comprise entre 2 nm et 500 nm.

En variante, la couche d'isolation optique comporte plusieurs matériaux différents avec des propriétés optiques précises. Dans un exemple de réalisation, l'indice de réfraction de la couche en contact avec le corps est le plus faible et les indices de réfraction augmentent à mesure que l'on s'éloigne du corps, de façon analogue aux fibres optiques à indice progressif (graded-index optical fiber, en terminologie anglo-saxonne). Ceci permet de combiner plusieurs couches avec différentes propriétés mécaniques. Ceci permet, par exemple, de déposer d'abord une couche de SiO₂ (n=2,3, densité 2,2 kg/m²), qui est relativement peu dense, suivie d'une deuxième couche fine de Al₂O₃ (n=1,7, densité 4 kg/m²) beaucoup plus dense mais plus isolant optiquement, pour confiner effectivement le mode optique avec le moindre impacte pour le mode mécanique.

Le résonateur est destiné à collecter la ou les espèces à détecter, la surface du résonateur est donc de préférence la plus grande possible pour maximiser la quantité d'espèces capturables.

Cependant on cherche de préférence à minimiser la surface latérale du résonateur pour limiter les pertes visqueuses par interaction avec le solvant et favoriser le cisaillement. On cherche donc à maximiser les surfaces d'extrémité du résonateur et à réduire la surface latérale. On cherche également à diminuer la masse du résonateur optomécanique pour avoir une bonne sensibilité en masse.

La forme du disque est donc particulièrement avantageuse en termes de rapport de surface. On choisit de préférence un résonateur présentant un rapport d'aspect important, un rapport dimension dans le plan du capteur / épaisseur du résonateur important.

Dans le cas d'un disque, le rapport Diamètre du disque/épaisseur est de préférence compris entre 10 et 100. Le diamètre maximal du résonateur est de préférence quelques centaines de µm.

Dans un exemple de réalisation, le résonateur comporte des bords effilés améliorant avantageusement les performances optiques du résonateur.

Le résonateur est en outre de préférence tel qu'il vibre dans un mode de volume dans le plan, permettant d'atteindre une fréquence de vibration élevée par exemple au moins égale à 100 MHz.

De préférence, le résonateur vibre dans un mode radial ou RBM (Radial Breathing Mode en terminologie anglo-saxonne), un tel mode permet d'atteindre un très bon couplage entre le mode optique et le mode mécanique. En effet, la vibration radiale du disque a un impact important sur les propriétés optiques du disque, notamment sur la longueur du trajet optique au sein du résonateur et donc sur la puissance lumineuse récupérée par le guide d'onde 2.

En variante, le résonateur peut vibrer dans un mode tangentiel ou un mode wine glass. Néanmoins il présente une efficacité réduite par rapport au résonateur dans un mode radial.

Sur la figure 2, on peut voir un autre exemple de réalisation du résonateur optomécanique dans lequel la couche d'isolation optique 9' est formée uniquement sur la face supérieure C.1 du corps dans la représentation de la figure 2, i.e. la face qui n'est pas en regard du support.

Sur les figures 3A et 3B on peut voir un autre exemple de réalisation du résonateur optomécanique, dans lequel la couche d'isolation optique 9" est formée uniquement sur la zone périphérique du corps C au-dessus du mode optique MO. La mise en oeuvre d'une couche d'isolation optique de surface réduite permet de limiter l'influence de la couche d'isolation optique sur les propriétés mécaniques du résonateur mécanique. En outre la zone périphérique extérieure est la zone qui voit le plus de déplacement dans le mode de vibration radial. En variante, la couche d'isolation optique recouvre également le bord latéral du corps et la zone périphérique extérieure de la face inférieure du corps.

Dans un autre exemple de réalisation représenté sur la figure 4, le mode optique MO ne se situe pas à la périphérie extérieure du corps mais à l'intérieur sur un diamètre inférieur au diamètre extérieur du corps et la couche d'isolation optique 9‴ se situe au regard du mode optique MO.

Dans les exemples décrits, la couche d'isolation optique a une épaisseur constante en tenant compte du procédé de fabrication. En variante, la couche présente des épaisseurs différentes suivant la zone recouverte. De préférence, elle présente une plus grande épaisseur au droit du mode optique et une épaisseur plus faible au droit des autres zones du corps, ce qui permet avantageusement de limiter l'influence de la couche d'isolation optique sur les propriétés mécaniques du résonateur.

Dans les exemples décrits ci-dessus, le capteur ne comporte pas de couche de fonctionnalisation, le capteur n'est alors pas sélectif vis-à-vis des espèces détectées.

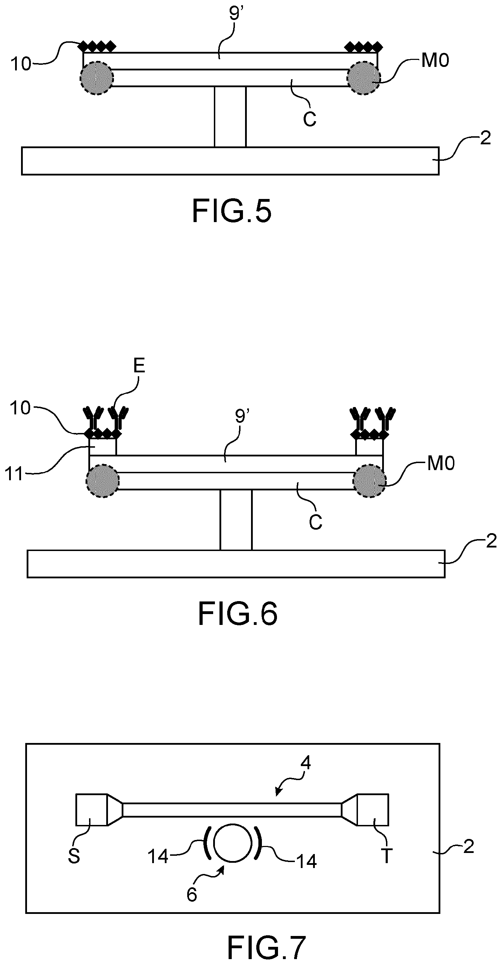

Sur les figures 5 et 6, on peut voir que selon l'invention le capteur est fonctionnalisé de sorte à être spécifique à une ou plusieurs espèces à détecter.

La couche de fonctionnalisation peut être sensible à des espèces biologiques, à des atomes individuels ou à des nanoparticules. Dans le cas des nanoparticules, la spécificité peut être dirigée contre des marqueurs présents en surface de ces nanoparticules ou contre l'élément atomique constitutif de la nanoparticule. Il peut également être envisagé une spécificité envers la taille des nanoparticules.

Sur la figure 5, la couche de fonctionnalisation 10 est formée directement sur la couche d'isolation optique 9'.

Sur la figure 6, une couche d'accroche 11 est déposée sur la couche d'isolation optique 9' et la couche de fonctionnalisation 10 est déposée sur la couche d'accroche. Dans cet exemple, la couche d'accroche 11 et la couche de fonctionnalisation 10 recouvrent entièrement la couche d'isolation optique 9'. Les molécules E d'espèce à détecter piégées par la couche de fonctionnalisation 10 sont schématisées.

En variante, la couche d'accroche et la couche de fonctionnalisation ou la couche de fonctionnalisation ne recouvrent qu'une partie de la couche d'isolation optique.

La mise en oeuvre d'une couche d'isolation optique est d'autant plus avantageuse dans le cas d'un capteur fonctionnalisé que la couche d'accroche est généralement réalisée préalablement à la couche de fonctionnalisation ou de greffage, et que celle-ci a pour effet de réduire la qualité de la surface du corps. La réalisation d'un disque avec des propriétés optiques précises au niveau due la zone active optique est alors rendue difficile. La couche d'isolation optique limite, voire empêche une telle dégradation de la surface du corps.

Par exemple, la couche de fonctionnalisation comporte au moins une macromolécule capable de reconnaissance spécifique d'une cible, i.e. l'espèce donnée à détecter.

La fonctionnalisation du résonateur à plusieurs espèces est obtenue par exemple en fonctionnalisant différentes parties du résonateur, chacune spécifique à une espèce, ou en réalisant une couche de fonctionnalisation qui mélange différents biorécepteurs spécifiques chacun à une espèce.

A titre d'exemple, la couche de fonctionnalisation comporte des anticorps spécifiques à une protéine ou à une petite molécule, par exemple une toxine, des aptamères reconnaissant spécifiquement une protéine ou une petite molécule, des brins d'ADN ou d'ARN qui s'hybrideront avec un brin d'ADN ou d'ARN complémentaire à celui greffé sur la surface du résonateur, des polymères à empreinte moléculaire (Molecular Imprinting polymer MIP en terminologie anglo-saxonne).

La fonctionnalisation de la surface du résonateur consiste à modifier les molécules présentes à la surface du capteur et/ou à greffer sur la surface du capteur les nouvelles molécules permettant la reconnaissance spécifique de la cible recherchée

La modification des molécules présentes à la surface du capteur peut par exemple consister, de manière non limitative, en l'oxydation d'une fonction, en la déshydratation d'une fonction alcool, en la substitution nucléophile d'un groupement par un autre ou en une estérification. Toutes ces transformations sont bien connues de l'homme du métier qui saura comment faire pour passer d'une fonction chimique à celle d'intérêt.

Une fonctionnalisation par greffage peut requérir en général une couche intermédiaire supportant la couche de nouvelles molécules apportant la fonctionnalisation voulue. Il existe plusieurs méthodes pour fonctionnaliser une surface en silicium. Une première méthode consiste à greffer une couche de PEG (chaîne polymère de polyéthylène glycol) sur la surface silicium. Une extrémité de la chaîne du PEG se lie de façon covalente à la surface silicium et l'autre extrémité reste libre permettant ainsi de greffer la molécule d'intérêt pour une reconnaissance spécifique du capteur. Cette méthode est décrite dans le document [2]. Une autre méthode consiste à utiliser des chaînes carbonées dont l'une des extrémités possède une fonction silane et l'autre extrémité est choisie de façon à greffer par la suite la molécule permettant la reconnaissance spécifique du capteur. L'autre extrémité peut être une fonction époxy, permettant par la suite de greffer de l'ADN, ou une fonction ester N-hydroxysuccimide qui permettra le greffage d'une protéine, par exemple l'immunoglobuline, par le biais d'un radical amine au sein de la structure de celle-ci. Cette méthode est décrite dans les documents [3] et [4]. Enfin, une autre méthode consiste à greffer sur la surface silicium un alkynène possédant une fonction alcène à une extrémité et une fonction alcyne protégée par un groupement triméthylgermanyle à l'autre extrémité. Après greffage sur la surface silicium, la fonction alcyne est utilisée pour coupler la molécule d'intérêt par chimie-clic (« click chemistry » en terminologie anglo-saxonne). Cette méthode est illustrée dans le document [5].

La couche de fonctionnalisation 10 présente une faible épaisseur, voire comporte une seule couche de molécules de fonctionnalisation. Avantageusement l'épaisseur de la couche de fonctionnalisation est inférieure à 20 nm, et de préférence inférieure à 10 nm. En outre la couche a une épaisseur constante sur toute la surface.

Dans la présente demande, on entend par « épaisseur constante » une couche dont l'épaisseur varie au plus de 25% de son épaisseur sur toute sa surface.

En outre la couche de fonctionnalisation est très avantageusement homogène sur la surface du résonateur, i.e. elle comporte un nombre de molécules par unité de surface relativement uniforme.

L'homogénéité de la couche correspond à la quantité de sites de reconnaissances de la cible à détecter par unité de surface, qui est un multiple du nombre de molécules bio-réceptrices immobilisés par unité de surface à la surface du résonateur. On définit une unité de surface comme étant au moins 1/100^{ieme} de la surface du capteur. Une couche est dite homogène, lorsque le nombre de sites de greffage/reconnaissance disponibles dans chaque unité de surface varie de moins de 5/100^{ieme} autour d'une valeur moyenne. Le nombre de sites de reconnaissance par unité de surface dépend du protocole de fonctionnalisation choisi et de la taille de la molécule bio-réceptrice.

La mise en oeuvre d'une couche de fonctionnalisation fine et avantageusement homogène permet de conserver les propriétés de couplage optique et de couplage optomécanique du résonateur après fonctionnalisation.

En outre la mise en oeuvre d'une couche homogène permet de remonter plus facilement à la concentration de l'espèce.

La couche de fonctionnalisation peut être localisée, avantageusement elle peut être déposée uniquement sur les faces d'extrémité du résonateur, voire sur une seule des faces d'extrémité, et non sur la face latérale du résonateur. Dans ce cas, la couche de fonctionnalisation n'intervient alors pas dans le couplage optique entre le guide d'onde et le résonateur.

De manière encore plus avantageuse, le capteur comporte une couche de passivation bloquant l'absorption des particules d'intérêts, cette couche est formée sur les zones du capteur où l'on ne souhaite pas que les particules cibles ne fixent, i.e. sur les zones autres que celles où est formée la couche de fonctionnalisation. La couche de passivation est par exemple formée au moins sur le substrat.

Dans le cas où la couche de fonctionnalisation recouvre une partie de la face d'extrémité supérieure du résonateur, de préférence sa zone périphérique, elle a alors par exemple une forme d'anneau, la couche de passivation recouvre également la partie centrale de la face d'extrémité supérieur du résonateur à l'intérieur de la couche de fonctionnalisation.

Grâce à la mise en oeuvre d'une couche de passivation, l'accroche des cibles recherchées en dehors de la zone sensible du capteur est limitée. La détection effective de plus faibles concentrations d'espèces au sein du milieu liquide est alors rendue améliorée.

Dans le cas où la couche de fonctionnalisation recouvre toute la surface sensible du capteur, la couche de passivation est formée uniquement sur le substrat.

La couche de passivation contient par exemple des silanes de formule X₃Si-(CH₂)nCH₃. La partie X₃Si- permet l'accroche sur le silicium et la chaîne aliphatique saturée -(CH₂)nCH₃ empêche le greffage des molécules d'intérêt.

Par exemple, X peut être un halogène (CI, Br...) ou un groupe R₃O- (R= CH₃-, CH₃CH₂-...).

Dans un autre exemple, la couche de passivation est un polymère PLL-g-PEG (poly(L-lysine)-graft-poly(éthylène glycol). La partie Lysine permet le greffage sur le substrat tandis que la chaîne éthylène glycol, empêche les molécules de se greffer sur le substrat:

Le fonctionnement du capteur comportant une couche de fonctionnalisation va maintenant être décrit.

On choisit la longueur d'onde de l'onde lumineuse à injecter dans le résonateur proche de la résonance optique du résonateur, i.e. à flanc du pic de résonance optique. L'onde lumineuse résonant à l'intérieur du résonateur optique est alors très sensible à la déformation mécanique du résonateur mécanique, en particulier lorsque le résonateur optique et mécanique sont confondus.

L'onde lumineuse à la longueur d'onde choisie est injectée dans le guide d'onde par une source lumineuse, par couplage optique l'onde lumineuse est injectée dans le résonateur optomécanique 6. L désigne l'onde lumineuse circulant dans le résonateur. La fréquence de modulation de la puissance de l'onde lumineuse est choisie de sorte à mettre en vibration le résonateur dans un mode de volume, avantageusement dans un mode radial.

Le capteur est immergé dans un liquide dont on souhaite mesurer la concentration en une espèce donnée et pour laquelle le capteur présente une couche de fonctionnalisation adaptée. Les molécules de l'espèce donnée sont alors capturées par la couche de fonctionnalisation et se fixent sur le résonateur, ce qui modifie la masse du résonateur et donc la fréquence de vibration du résonateur. La mesure de la variation de la fréquence de vibration, permet de déterminer la quantité d'espèce donnée déposée sur le résonateur et de déterminer la concentration. La présence de la couche d'isolation optique empêche le mode optique d'être modifié directement par la masse déposée, il est modifié principalement ou uniquement par le mouvement du résonateur.

De préférence, avant la circulation de l'échantillon contenant la cible à détecter, une solution tampon biologique présentant une viscosité similaire à celle de l'échantillon contenant la cible circule autour du capteur ce qui permet au capteur d'atteindre une fréquence de résonance stable. Ensuite, l'échantillon contenant la cible est injecté et le capteur perçoit le changement de fréquence de résonance provenant du greffage de la cible sur le résonateur Cette réponse du capteur au greffage biologique a une dynamique en N*e^{-x/t} (k=Ae^{(Ea/RT)}) et dure de l'ordre de 5 min a 40 min en pratique.

Dans un exemple avantageux, on utilise plusieurs capteurs.

Dans une configuration à deux capteurs, le premier capteur est fonctionnalisé avec une première molécule biologique reconnaissant spécifiquement la cible. Le deuxième capteur est fonctionnalisé avec une deuxième molécule biologique de nature similaire à la première molécule, mais possédant une capacité de reconnaissance spécifique d'une autre espèce que la cible recherchée.

Le signal émis par le premier capteur contient l'information sur l'accroche spécifique de la cible et l'information sur l'accroche non-spécifique, d'autres éléments que celui recherché, qui est une information parasite. Le signal émis par le deuxième capteur contient seulement l'information sur l'accroche non spécifique. En soustrayant au signal du premier capteur, le signal du deuxième capteur, on obtient l'information sur le greffage spécifique, qui permet de détecter la présence de la cible recherchée.

Après une mesure réalisée par le capteur, on peut effectuer un nettoyage de celui-ci.

Selon un exemple de rinçage, une solution de tampon biologique est envoyée sur le capteur par le biais du système d'amené du fluide. Cette solution provoque le détachement d'une partie des cibles immobilisées sur le capteur. Certaines cibles peuvent rester à la surface du capteur, immobilisées sur leurs biorécepteurs correspondants. Ces éléments restants provoquent une diminution de la quantité de sites disponibles pour des analyses ultérieures avec les mêmes capteurs.

Néanmoins, le capteur selon l'invention présente une grande sensibilité et est donc particulièrement adapté pour détecter qu'un très faible nombre de molécules cibles. La détection peut souvent être faite avec la reconnaissance d'un nombre d'élément cibles ne représentant qu'une portion des cibles greffables en totalité à la surface du capteur. Ainsi, les capteurs peuvent, notamment dans l'application pour détecter un faible nombre de molécules cibles, mener plusieurs analyses successives, car les échantillons analysés ne contiennent pas suffisamment d'éléments cibles pour saturer la surface du capteur.

Lorsque l'on souhaite forcer la séparation des éléments cibles restants afin de libérer tous les biorécepteurs. Plusieurs techniques peuvent être utilisées à adaptés en fonction des molécules cibles.

Dans le cas de brins d'ADN hybridés (cible et bio récepteur), on peut augmenter la température du capteur à 80°C pendant une durée de quelques minutes, par exemple au moyen d'un dispositif de chauffe rapporté, ce qui provoque la déhybridation de tout complexe ADN-ADN et relargue les éléments visés de la surface du disque. Une solution de rinçage type tampon biologique peut circuler simultanément pour collecter les éléments relargués.

Pour des reconnaissances protéines - protéines ou protéines - autre élément biologique à détecter, tels que des toxines, des bactéries ou des cellules, des solutions faiblement concentrées de soude NaOH ou de guanadinium hydrochloride peuvent être utilisées qui peuvent provoquer la dissociation de la liaison antigène-anticorps et régénérer complètement le capteur avant de nouvelles mesures. La régénération peut néanmoins dégrader les protéines réceptrices, limitant le nombre de régénérations possibles, per exemple suivant la surface fonctionnalisée, le nombre de régénérations peut être compris entre 10 et 40.

Dans l'exemple de fonctionnement décrit ci-dessus le résonateur est mis en vibration par l'onde lumineuse de mesure.

En variante, le résonateur n'est pas mis en vibration par l'onde lumineuse. On mesure uniquement la variation de fréquence de résonance grâce au bruit brownien du résonateur, en effet l'agitation thermique fait vibrer le résonateur à sa fréquence de résonance. Dans cette variante, l'onde lumineuse sert uniquement à détecter la variation de fréquence de vibration.

Dans les autres exemples décrits ci-dessus, le résonateur optomécanique comporte un corps muni d'une couche d'isolation optique au moins sur sa surface supérieure C.1 au moins au droit du mode optique.

Dans une variante avantageuse, le capteur représenté sur la figure 7 comporte en plus des moyens d'excitation 14 spécifiques pour mettre en vibration le résonateur, à sa fréquence de résonance, ce qui permet une grande sensibilité dans la lecture des changements de fréquence mécanique, et de préférence à une amplitude importante pour maximiser le rapport signal sur bruit. La mise en vibration du résonateur permet d'améliorer la résolution.

Le greffage des cibles biologiques, augmente la masse du résonateur mécanique, ce qui modifie sa fréquence de résonance, ce qui est convertit par le résonateur optique formant transducteur

Il peut donc coexister des moyens optiques de mise en résonance optique du résonateur optique et des moyens de mise en résonance mécanique du résonateur mécanique. Le résonateur optique forme un transducteur, qui convertit alors la résonance mécanique en une information lumineuse puis électrique.

Dans un autre exemple les moyens d'excitation 14 sont de type électrostatique, ils comportent une première électrode 14.1 formée sur le bord latéral du résonateur 4 par exemple en dopant le silicium et une deuxième électrode 14.2 formée sur le support en regard de la première électrode.

En variante, les moyens d'excitation sont de type optique par pression de radiation, par exemple utilisant un mode dit « pump-probe » utilisant un signal lumineux de longueur d'onde différente du signal lumineux servant à la mesure, et dont l'amplitude est modulée à la fréquence de résonance du disque. En variante un seul signal lumineux est utilisé qui assure à la fois la mesure et l'excitation ; celui-ci est modulé au moyen d'un modulateur électrooptique.

Dans une variante avantageuse, on intègre une boucle de verrouillage de phase (« Phase Lock Loop » en terminologie anglo-saxonne) ce qui permet d'asservir la phase de la vibration à la résonance.

De manière avantageuse, on réalise un résonateur de masse réduite afin d'augmenter la sensibilité du capteur.

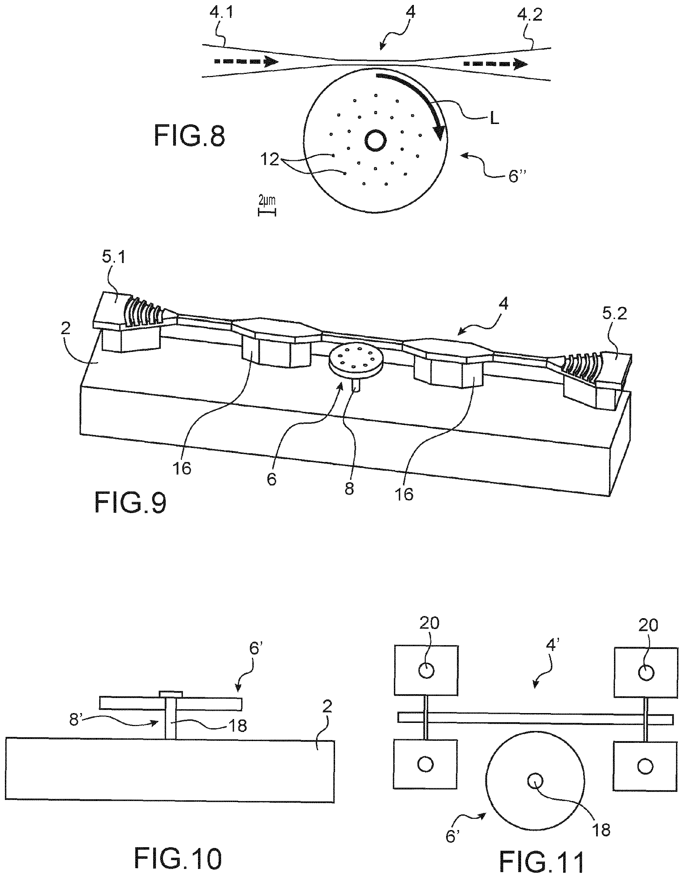

Ceci peut être obtenu en réalisant des trous 12 traversant dans le résonateur 6", comme cela est représenté à la figure 8. Les trous 12 offrent l'avantage supplémentaire d'augmenter la surface spécifique couverte par couche de fonctionnalisation. Les trous sont par exemple dans la direction normale au plan du résonateur. En outre ces trous peuvent avantageusement servir pour faciliter la libération du résonateur, lorsqu'il est libéré par gravure de la couche sacrificielle dans un procédé microélectronique.

Lorsque le pied est réalisé dans le matériau de la couche sacrificielle, par exemple en SiO₂, son diamètre avant libération est choisi de sorte qu'à la fin de la gravure le diamètre « restant » soit suffisant pour supporter le résonateur.

Sur la figure 9, on peut voir un exemple de réalisation d'un capteur avantageux lorsque le guide d'onde est supporté par des portions de la couche sacrificielle.

Lors de la libération du résonateur, on ne souhaite pas libérer entièrement le guide d'onde 2, ni les réseaux de couplage.

Par ailleurs la largeur des guides d'ondes est déterminée pour obtenir des propriétés optiques particulières (par exemple, pour être monomode optiquement. Lorsque cette largeur est petite par rapport aux distances à graver sous le résonateur, on prévoit avantageusement des portions de guide d'onde 16 plus larges à distance des zones de couplage avec le résonateur et/ou à proximité des connexions entre le guide d'onde et les réseaux de couplage 5.1, 5.2.

Ainsi la couche sacrificielle sous les portions 16 ne sont pas entièrement gravées et servent de support au guide d'onde. La largeur des portions 16 est choisie de sorte à être au moins égale à la distance maximale à graver dans le plan + une largeur suffisant pour supporter le guide d'onde.

Dans l'exemple représenté les portions 16 sont réparties régulièrement le long du guide d'onde mais ceci n'est pas limitatif.

Dans un autre exemple de réalisation avantageux représenté sur les figures 10 et 11 permettant de s'affranchir des problèmes de gravure le pied 8' du résonateur 6' et /ou les supports du guide d'onde 4' sont réalisés par des vias 18, 20 en un matériau insensible à la gravure lors de la libération. Par exemple, lorsque la libération est obtenue par gravure d'oxyde de silicium par du HF, les vias sont réalisés en polysilicium en ou en métal.

Le guide d'onde, est couplé à la source de lumière et au dispositif d'analyse par exemple par des fibres optiques positionnées à un angle optimal grâce à des positionneurs piézoélectriques au-dessus des réseaux de couplage. Avantageusement, on peut utiliser une technique de fibrage consistant à « coller » des fibres directement sur puce.

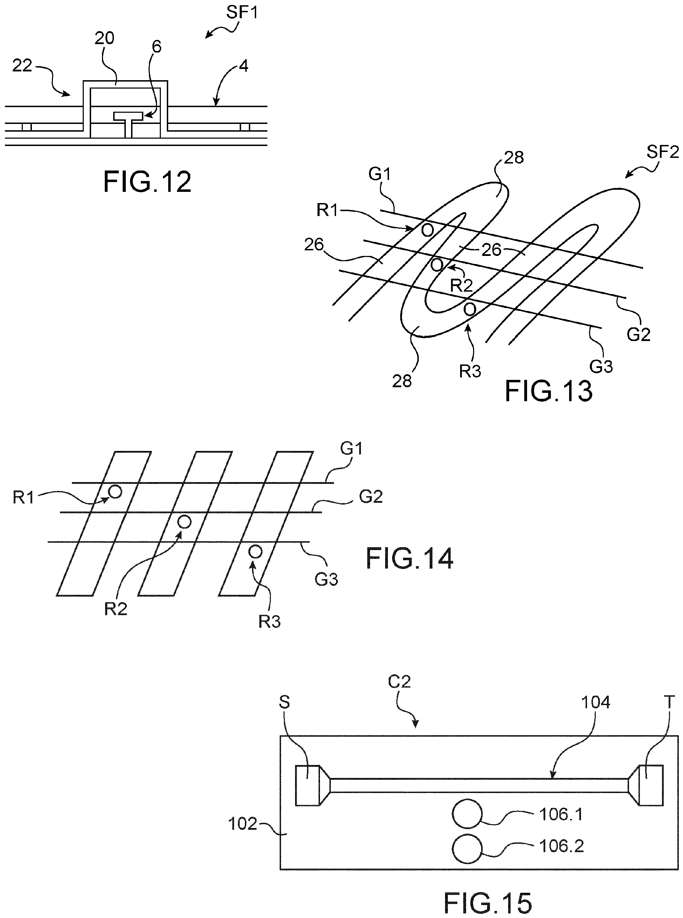

Sur la figure 12, on peut voir un exemple de système microfluidique intégrant le capteur.

Le système SF1 comporte un microcanal 20 par exemple formé dans un capot 22 qui est rapporté sur le substrat. Le liquide à analyser est injecté dans le canal 20. Les dimensions du canal sont telles que le liquide est contraint de circuler au niveau du résonateur uniquement. Ainsi on maximise la probabilité de capture des espèces à détecter et on diminue le temps d'analyse. En outre on peut réduire le volume de liquide requis. Un microcanal typique peut mesurer de 5 µm à 500 µm en hauteur et de 10 µm à 700 µm en largeur.

Dans l'exemple représenté, le système comporte un seul capteur et le guide d'onde est transversal au canal.

En variante, le système comporte plusieurs capteurs disposés les uns à la suite des autres et fonctionnalisés différemment et chacun couplé à son propre guide d'onde. Ainsi avec un seul système il est possible de déterminer les concentrations de plusieurs espèces dans le même échantillon de liquide et quasi-simultanément.

En variante, le guide d'onde est aligné avec au moins une partie du canal et plusieurs résonateurs sont couplés à celui-ci et par multiplexage il est possible de réaliser la détection de plusieurs espèces, voire effectuer des contrôles positifs, par exemple en utilisant deux capteurs, un premier capteur fonctionnalisé avec une molécule bio réceptrice et possédant une spécificité envers la molécule recherchée et un deuxième capteur fonctionnalisé avec une molécule bio réceptrice de même type que le premier capteur, mais ne possédant pas de spécificité envers la molécule recherchée.

Sur la figure 13, on peut voir un autre exemple de circuit microfluidique SF2 comportant un canal 24 en forme de serpentin comprenant des portions droites 26 raccordée par des portions courbes 28 et un résonateur R1, R2, R3 situé dans une portion droite 26 et des guides d'ondes G1, G2, G3 couplés à chaque résonateur, et transversaux aux portions droites.

En variante, les résonateurs sont couplés au même guide d'onde et la détection est réalisée par multiplexage.

Sur la figure 14, on peut voir encore un autre exemple de système microfluidique SF3 qui diffère du système de la figure 13 par le fait que les portions droites 26 ne sont pas raccordées par des portions courbes et forment des microcanaux indépendants pouvant être alimentés par des liquides différents.

De manière avantageuse, la fonctionnalisation peut être réalisée en faisant circuler le liquide de fonctionnalisation dans le canal lors de la fabrication.

Dans le cas du système SF2, on peut avantageusement réaliser préalablement uniquement les portions droites que l'on fonctionnalise avec des liquides différents, ainsi chaque résonateur a sa propre fonctionnalisation et ensuite les portions courbes sont réalisées de sorte à former un système unique avec des résonateurs ayant des fonctionnalisations différentes.

Sur la figure 15 on peut voir un exemple de capteur dans lequel le résonateur optique et le résonateur mécanique sont distincts. Ce mode de réalisation n'est pas revendiqué.

Le capteur C2 comporte une structure de capteur comprenant un substrat 102, un guide d'onde 104, un résonateur optique 106.1 couplé optiquement au guide d'onde 104 et un résonateur mécanique 106.2 disposé dans le champ évanescent du résonateur optique 106.1 et apte, du fait de sa modification de masse par capture des particules, à modifier les propriétés optiques du résonateur optique. Le capteur C2 comporte également une source de lumière S connectée à une extrémité du guide d'onde 104 et des moyens de traitement T connectés à l'autre extrémité du guide d'onde 104.

Le résonateur mécanique 106.2 vibre en mode de volume de préférence en mode radial.

Dans cet exemple et de préférence, seul le résonateur optique 106.1 comporte une couche d'isolation optique, celle-ci n'étant pas nécessaire sur le résonateur mécanique. En outre les propriétés mécaniques du résonateur mécanique ne sont pas modifiées. Néanmoins une telle couche peut être réalisée sur le résonateur mécanique pour des simplicités de procédé de fabrication.

Dans cet exemple, le résonateur mécanique peut présenter une forme discontinue ou irrégulière, par exemple une forme carrée puisqu'il n'est pas destiné à guider l'onde lumineuse.

Plus généralement, le diamètre du pied est dix fois plus petit que la plus petite dimension du résonateur mécanique dans le plan du capteur, ainsi le pied gêne peu ou pas la vibration radiale du résonateur.

On choisit de préférence un résonateur-mécanique présentant un rapport d'aspect important, un rapport dimension dans le plan du capteur / épaisseur du résonateur important.

Le résonateur mécanique peut être excité par des moyens électriques extérieurs ou par l'agitation thermique, dans ce dernier cas le rapport signal sur bruit est moins bon.

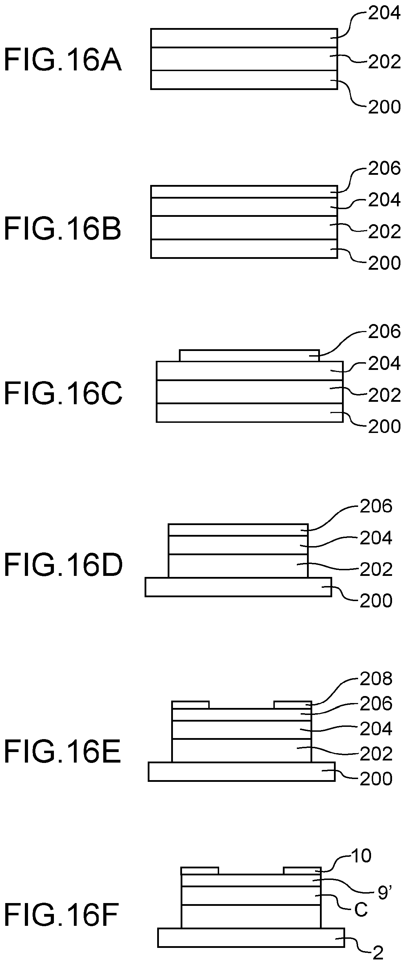

Un exemple de procédé de réalisation du capteur C1 va maintenant être décrit sur la base des figures 16A à 16F.

Par exemple, on utilise un substrat SOI (Silicon on Insulator) comportant un substrat en polysilicium 200, une couche de SiO₂ 202, par exemple de 2 µm d'épaisseur, et une couche de silicium monocristallin 204 par exemple de 0,22 µm d'épaisseur, représenté sur la figure 16A.

Lors d'une première étape, on forme une couche d'isolation optique 206 sur la couche 204, par exemple par dépôt. Par exemple, une couche de SiO₂ peut être déposée par dépôt chimique en phase vapeur (CVD ou chemical vapor déposition, en terminologie anglo-saxonne).

Par exemple la couche 206 est en SiO₂ et a une épaisseur de l'ordre de 100 nm. L'élément ainsi formé est représenté sur la figure 16B.

Lors d'une étape suivante, on définit par lithographie, puis gravure, la structure du capteur, notamment le résonateur et le guide d'onde. Par exemple la gravure est une gravure sèche avec arrêt sur la couche 202.

L'élément ainsi obtenu est représenté sur la figure 16C.

Lors d'une étape suivante on forme une couche intermédiaire 208 permettant la fonctionnalisation du résonateur. Par exemple on dépose une couche d'Au d'épaisseur d'environ 10 nm par PVD. La couche 208 est ensuite définie de sorte à n'être qu'à l'aplomb du mode optique, par exemple par transfert ou lift-off.

L'élément ainsi obtenu est représenté sur la figure 16D.

L'élément ainsi obtenu est représenté sur la figure 16E.

Le résonateur est ensuite libéré par exemple par gravure humide isotropique, par exemple au HF, de la couche 202.

Lors d'une étape suivante, la couche de fonctionnalisation est formée sur la couche intermédiaire, par exemple un dépôt d'aptamères sur la couche d'Au par techniques chimiques d'immersion. L'élément ainsi obtenu est représenté sur la figure 16F. On obtient un résonateur optomécanique comportant le corps C, la couche d'isolation optique 9' et la couche de fonctionnalisation 10.

Dans le cas d'un capteur à actionnement électrostatique, on prévoit une étape lors de laquelle on réalise un dopage par implantation localisée afin de réaliser des pistes conductrices.

Ensuite on forme une succession de dépôts de couches de différents métaux pour former les contacts électriques. L'empilement de couches ainsi formé est par exemple Ti/TiN/Au. L'empilement de couches est formé par exemple par dépôt puis les contacts 206 sont définis par lithographie puis gravure.

Dans le cas du capteur de la figure 10, des étapes supplémentaires pour former les tiges de suspension métalliques sont requises, par exemples des étapes de réalisation de vias en métal bien connues de l'homme du métier sont réalisées.

On réalise ensuite une fonctionnalisation du capteur. Il peut s'agir d'une fonctionnalisation de toute la structure, la couche de fonctionnalisation étant formée à la fois sur le résonateur et sur le guide d'onde, ou alors une fonctionnalisation localisée, i.e. par exemple uniquement sur les faces d'extrémité du résonateur. La couche de fonctionnalisation peut être réalisée suivant l'une des techniques décrites ci-dessus.

Dans le cas d'une fabrication d'un système microfluidique, le procédé comporte en outre la fabrication d'un capot muni d'au moins un canal et d'assemblage étanche du capot et du capteur. La fonctionnalisation peut avoir lieu ensuite par circulation d'un fluide assurant la fonctionnalisation du résonateur

### Références :

[1] E. Gil-Santos et al., « Optomechanical détection of vibration modes of a single bacterium », Nature Nanotechnology, 15 (469-474), 2020,
[1bis] King Yan Fong et al. «Nano-Optomechanical Resonators in Microfluidics", Nano letters, 15, 6116-6120, (2005)
[1ter] EP 3462145 A1
[2] Zhang, M., Desai, T. & Ferrari, M. Proteins and cells on PEG immobilized silicon surfaces. Biomaterials 19, 953-960 (1998).
[3] Demes, T. et al. DNA grafting on silicon nanonets using eco-friendly functionalization process based on epoxy silane. Materials Today : Proceedings 6, 333-339 (2019).
[4] Wang, Z.-H. & Jin, G. Silicon surface modification with a mixed silanes layer to immobilize proteins for biosensor with imaging ellipsometry. Colloids and Surfaces B: Biointerfaces 34, 173-177 (2004).
[5] Li, Y., Wang, J. & Cai, C. Rapid grafting of Azido-Labeled Oligo(ethylene glycol)s onto an Alkynyl-Terminated Monolayer on Nonoxidized Silicon via Microwave-Assisted "Click" Reaction, Langmuir 27, 2437-2445 (2011).

## Revendications

1. Structure de capteur de concentration d'au moins une espèce donnée en milieu liquide comportant :
- un support (2),
- au moins un guide d'onde (4),
- au moins un résonateur optique suspendu au support, ledit résonateur optique étant couplé optiquement au guide d'onde de sorte que le guide d'onde (4) injecte dans le résonateur optique une onde électromagnétique et collecte ladite onde électromagnétique sortant du guide d'onde (4), ledit résonateur optique comprenant une zone active optique de circulation de l'onde électromagnétique, et
- au moins un résonateur mécanique suspendu au support (2), ledit résonateur mécanique et ledit résonateur optique étant couplés, ledit résonateur mécanique étant configuré pour vibrer en mode de volume et comportant au moins une face s'étendant dans le plan du capteur et configurée pour recevoir des molécules de ladite espèce donnée,
dans laquelle le résonateur optique comporte un corps (C) comprenant la zone active optique (MO), ledit corps (C) comprenant une première face (C.1) et une deuxième face , la deuxième face étant en regard du support (2) et la première face (C.1) étant orientée à l'opposé du support (2), ledit résonateur optique comportant également une couche d'isolation optique (9) déposée au moins sur la première face (C.1) au moins à l'aplomb de la zone active optique (MO) de sorte à confiner au moins en partie l'onde électromagnétique dans le corps,
la structure de capteur de concentration, destinée à être immergée en milieu liquide, comprenant en outre une couche de fonctionnalisation (10), configurée pour permettre de capturer la ou les espèces dont on veut déterminer la concentration dans le milieu liquide, et recouvrant la couche d'isolation optique (9), la couche de fonctionnalisation (10) et la couche d'isolation optique (9) étant soit directement en contact soit séparées par l'intermédiaire d'une couche d'accroche (11),
dans laquelle le résonateur optique et le résonateur mécanique sont un même élément suspendu au support, la première face formant la face configurée pour recevoir des molécules, ledit élément étant un résonateur optomécanique (6).

2. Structure de capteur de concentration selon la revendication 1, dans laquelle la couche d'isolation optique est également déposée sur le guide d'onde.

3. Structure de capteur de concentration selon la revendication 1 ou 2, dans laquelle le rapport entre l'indice de réfraction optique d'un matériau de la couche d'isolation optique (9) et l'indice de réfraction optique d'un matériau du corps (C) est inférieur ou égal à 0,75.

4. Structure de capteur de concentration selon la revendication 1, 2 ou 3, dans laquelle le rapport entre le module d'Young d'un matériau de la couche d'isolation optique (9) et du module d'Young d'un matériau du corps (C) est inférieur ou égale à 10.

5. Structure de capteur de concentration selon l'une des revendications précédentes, dans laquelle la couche d'isolation optique (9) présente une épaisseur inférieure ou égale à la distance entre la première face du corps (C) et la deuxième face du corps (C).

6. Structure de capteur de concentration selon l'une des revendications précédentes, dans laquelle la couche d'isolation optique comporte plusieurs matériaux présentant des indices optiques différents.

7. Structure de capteur de concentration selon l'une des revendications précédentes, dans laquelle le résonateur optique (6) a la forme d'un disque, d'un anneau ou d'un hippodrome et dans laquelle la zone active optique est située dans la partie périphérique extérieure du corps et la couche d'isolation optique a la forme d'un anneau.

8. Structure de capteur de concentration selon l'une des revendications précédentes, dans laquelle la dimension du résonateur mécanique et du résonateur optique dans la direction normale au plan du capteur est au moins 10 fois inférieure aux dimensions du résonateur mécanique et du résonateur optique dans le plan du capteur.

9. Structure de capteur de concentration selon l'une des revendications précédentes, dans laquelle la couche de fonctionnalisation est présente uniquement sur la couche d'isolation optique.

10. Structure de capteur de concentration selon l'une des revendications précédentes, dans laquelle le résonateur mécanique est configuré pour vibrer dans un mode radial.

11. Structure de capteur de concentration selon l'une des revendications précédentes, dans laquelle le résonateur mécanique et le résonateur optique sont suspendus par un pied reliant une face des résonateurs en regard du support et le support.

12. Structure de capteur de concentration selon l'une des revendications précédentes, comportant des moyens d'excitation du résonateur mécanique de sorte à le mettre en vibration, de préférence à sa fréquence de résonance.

13. Capteur de concentration d'au moins une espèce donnée en milieu liquide comportant au moins une structure de capteur selon l'une des revendications précédentes, une source lumineuse connectée à une extrémité du guide d'onde, et des moyens de traitement de l'onde lumineuse connectés à l'autre extrémité du guide d'onde.

14. Système microfluidique comportant au moins un canal de circulation du liquide dont la concentration d'au moins une espèce est à mesurer et au moins un capteur de concentration selon la revendication 13, le résonateur optique et le résonateur mécanique étant disposés dans le canal.

## Patentansprüche

1. Sensorstruktur für die Konzentration von mindestens einer gegebenen Art in einem flüssigen Medium, die Folgendes umfasst:
- einen Träger (2),
- mindestens einen Wellenleiter (4),
- mindestens einen optischen Resonator, der am Träger aufgehängt ist, wobei der optische Resonator optisch mit dem Wellenleiter gekoppelt ist, so dass der Wellenleiter (4) eine elektromagnetische Welle in den optischen Resonator einspeist und die aus dem Wellenleiter (4) kommende elektromagnetische Welle sammelt, wobei der optische Resonator einen optisch aktiven Bereich für die Zirkulation der elektromagnetischen Welle umfasst, und
- mindestens einen mechanischen Resonator, der am Träger (2) aufgehängt ist, wobei der mechanische Resonator und der optische Resonator gekoppelt sind, wobei der mechanische Resonator dazu konfiguriert ist, im Volumenmodus zu schwingen, und mindestens eine Fläche umfasst, die sich in der Ebene des Sensors erstreckt und dazu konfiguriert ist, Moleküle von der gegebenen Art aufzunehmen,
wobei der optische Resonator einen Körper (C) umfasst, der den optisch aktiven Bereich (MO) umfasst, wobei der Körper (C) eine erste Fläche (C.1) und eine zweite Fläche umfasst, wobei die zweite Fläche gegenüber dem Träger (2) liegt und die erste Fläche (C.1) dem Träger entgegengesetzt ausgerichtet ist, wobei der optische Resonator außerdem eine optische Isolationsschicht (9) umfasst, die mindestens auf der ersten Fläche (C.1) mindestens senkrecht zum optisch aktiven Bereich (MO) aufgebracht ist, um die elektromagnetische Welle mindestens teilweise im Körper zu begrenzen,
wobei die Konzentrationssensorstruktur dazu bestimmt ist, in ein flüssiges Medium eingetaucht zu werden, und ferner eine Funktionalisierungsschicht (10) umfasst, die dazu konfiguriert ist, das Einfangen der Art oder der Arten zu ermöglichen, deren Konzentration im flüssigen Medium bestimmt werden soll, und die die optische Isolationsschicht (9) bedeckt, wobei die Funktionalisierungsschicht (10) und die optische Isolationsschicht (9) entweder direkt in Kontakt stehen oder durch eine Haftschicht (11) getrennt sind,
wobei der optische Resonator und der mechanische Resonator ein und dasselbe Element sind, das am Träger aufgehängt ist, wobei die erste Fläche die Fläche bildet, die dazu konfiguriert ist, Moleküle aufzunehmen, wobei das Element ein optomechanischer Resonator (6) ist.

2. Konzentrationssensorstruktur nach Anspruch 1, wobei die optische Isolationsschicht außerdem auf dem Wellenleiter aufgebracht ist.

3. Konzentrationssensorstruktur nach Anspruch 1 oder 2, wobei das Verhältnis zwischen dem optischen Brechungsindex eines Materials der optischen Isolationsschicht (9) und dem optischen Brechungsindex eines Materials des Körpers (C) kleiner oder gleich 0,75 ist.

4. Konzentrationssensorstruktur nach Anspruch 1, 2 oder 3, wobei das Verhältnis zwischen dem Young-Modul eines Materials der optischen Isolationsschicht (9) und dem Young-Modul eines Materials des Körpers (C) kleiner oder gleich 10 ist.

5. Konzentrationssensorstruktur nach einem der vorhergehenden Ansprüche, wobei die optische Isolationsschicht eine Dicke (9) aufweist, die kleiner oder gleich dem Abstand zwischen der ersten Fläche des Körpers (C) und der zweiten Fläche des Körpers (C) ist.

6. Konzentrationssensorstruktur nach einem der vorhergehenden Ansprüche, wobei die optische Isolationsschicht mehrere Materialien umfasst, die unterschiedliche optische Indizes aufweisen.

7. Konzentrationssensorstruktur nach einem der vorhergehenden Ansprüche, wobei der optische Resonator (6) die Form einer Scheibe, eines Rings oder eines Hippodroms hat und wobei sich der optisch aktive Bereich im äußeren Umfangsabschnitt des Körpers befindet und die optische Isolationsschicht die Form eines Rings hat.

8. Konzentrationssensorstruktur nach einem der vorhergehenden Ansprüche, wobei die Abmessung des mechanischen Resonators und des optischen Resonators in der zur Ebene des Sensors normalen Richtung mindestens zehnmal kleiner ist als die Abmessungen des mechanischen Resonators und des optischen Resonators in der Ebene des Sensors.

9. Konzentrationssensorstruktur nach einem der vorhergehenden Ansprüche, wobei die Funktionalisierungsschicht nur über der optischen Isolationsschicht vorhanden ist.

10. Konzentrationssensorstruktur nach einem der vorhergehenden Ansprüche, wobei der mechanische Resonator dazu konfiguriert ist, in einem radialen Modus zu schwingen.

11. Konzentrationssensorstruktur nach einem der vorhergehenden Ansprüche, wobei der mechanische Resonator und der optische Resonator durch einen Fuß aufgehängt sind, dereine Fläche der Resonatoren gegenüber dem Träger und den Träger verbindet.

12. Konzentrationssensorstruktur nach einem der vorhergehenden Ansprüche, der Mittel zum Anregen des mechanischen Resonators umfasst, um ihn in Schwingung, vorzugsweise bei seiner Resonanzfrequenz, zu versetzen.

13. Sensor für die Konzentration von mindestens einer gegebenen Art in einem flüssigen Medium, der mindestens eine Sensorstruktur nach einem der vorhergehenden Ansprüche, eine Lichtquelle, die mit einem Ende des Wellenleiters verbunden ist, und Mittel zum Verarbeiten der Lichtwelle, die mit dem anderen Ende des Wellenleiters verbunden sind, umfasst.

14. Mikrofluidisches System, das mindestens einen Zirkulationskanal für die Flüssigkeit, deren Konzentration von mindestens einer Art gemessen werden soll, und mindestens einen Konzentrationssensor nach Anspruch 13 umfasst, wobei der optische Resonator und der mechanische Resonator im Kanal angeordnet sind.

## Claims

1. A sensor structure for sensing the concentration of at least one given species in a liquid medium including:
- a support (2),
- at least one waveguide (4),
- at least one optical resonator hanging on the support, said optical resonator being optically coupled to the waveguide so that the waveguide (4) injects into the optical resonator an electromagnetic wave and collects said electromagnetic wave coming out of the waveguide, said optical resonator comprising an optical active area for the circulation of the electromagnetic wave, and
- at least one mechanical resonator hanging on the support (2), said mechanical resonator and said optical resonator being coupled, said mechanical resonator being configured to vibrate in a volume mode and including at least one face extending in the plane of the sensor and configured to receive molecules of said given species,
wherein the optical resonator includes a body (C) comprising the optical active area (MO), said body (C) comprising a first face (C.1) and a second face, the second face facing the support (2) and the first face (C.1) being oriented away from the support (2), said optical resonator also including an optical isolation layer (9) deposited at least over the first face (C.1) at least in line with the optical active area (MO) so as to confine at least partially the electromagnetic wave in the body,
the concentration sensor structure, intended to be immersed in a liquid medium, further comprising a functionalization layer (10), configured to capture the at least one given species of which the concentration in the liquid medium is desired, and covering the optical isolation layer (9), the functionalization layer (10) and the optical isolation layer (9) being either directly in contact or separated by an adhesion layer (11),
wherein the optical resonator and the mechanical resonator are the same element suspended from the support, the first face forming the face configured to receive molecules, said element being an opto-mechanical resonator (6).

2. The concentration sensor structure according to claim 1, wherein the optical isolation layer is also deposited over the waveguide.

3. The concentration sensor structure according to claim 1 or 2, wherein the ratio between the optical refractive index of a material of the optical isolation layer (9) and the optical refractive index of a material of the body (C) is lower than or equal to 0.75.

4. The concentration sensor structure according to claim 1, 2 or 3, wherein the ratio between the Young's modulus of a material of the optical isolation layer (9) and of the Young's modulus of a material of the body (C) is lower than or equal to 10.

5. The concentration sensor structure according to one of the preceding claims, wherein the optical isolation layer (9) has a thickness less than or equal to the distance between the first face of the body (C) and the second face of the body (C).

6. The concentration sensor structure according to one of the preceding claims, wherein the optical isolation layer includes several materials having different optical indices.

7. The concentration sensor structure according to one of the preceding claims, wherein the optical resonator (6) has a disk, ring or racetrack like shape and wherein the optical active area is located in the external peripheral portion of the body and the optical isolation layer has a ring-like shape.

8. The concentration sensor structure according to one of the preceding claims, wherein the dimension of the mechanical resonator and of the optical resonator in the direction normal to the plane of the sensor is at least 10 times smaller than the dimensions of the mechanical resonator and of the optical resonator in the plane of the sensor.

9. The concentration sensor structure according to one of the preceding claims, wherein the functionalization layer is present only over the optical isolation layer.

10. The concentration sensor structure according to one of the preceding claims, wherein the mechanical resonator is configured to vibrate in a radial mode.

11. The concentration sensor structure according to one of the preceding claims, wherein the mechanical resonator and the optical resonator hang by a foot connecting a face of the resonator facing the support and the support.

12. The concentration sensor structure according to one of the preceding claims, including means for exciting the mechanical resonator so as to make it vibrate preferably at its resonant frequency.

13. A sensor for sensing the concentration of at least one given species in a liquid medium including at least one sensor structure according to one of the preceding claims, a light source connected to one end of the waveguide, and means for processing the light wave connected to the other end of the waveguide.

14. A microfluidic system including at least one channel for the circulation of a liquid whose concentration in at least one species is to be measured and at least one concentration sensor according to claim 13, the optical resonator and the mechanical resonator being disposed in the channel.
